# FASCICULE DE BREVET EUROPEEN

(11) **EP 0 991 712 B1**
(45) Date de publication et mention de la délivrance du brevet: **05.10.2005**
(21) Numéro de dépôt: 98933691.2
(22) Date de dépôt: 23.06.1998
(51) Int. Cl.: C08K 9/06, C08L 83/07

(54) **PROCEDE DE PREPARATION D'UNE SUSPENSION DE SILICE DANS UNE MATRICE SILICONE VULCANISABLE POUR FORMER DES ELASTOMERES**
VERFAHREN ZUR HERSTELLUNG EINER KIESELÄURESUSPENSION IN EINER VULKANISIERBAREN SILIKON-MATRIX GEEIGNET ZUR HERSTELLUNG VON ELASTOMEREN
METHOD FOR PREPARING A SILICA SUSPENSION IN A VULCANISABLE SILICON MATRIX TO FORM ELASTOMERS

(30) Priorité: 24.06.1997 FR 9708171
(43) Date de publication de la demande: 12.04.2000
(73) Titulaire: RHODIA CHIMIE, 92408 Courbevoie Cédex (FR)
(72) Inventeur: CANPONT, Dominique, F-69600 Oullins (FR); PLANTIER, André, (FR); POUCHELON, Alain, F-69330 Meyzieu (FR)
(74) Mandataire: Trolliet, Maurice
(86) Numéro de dépôt international: PCT/FR1998/001319
(87) Numéro de publication internationale: WO 1998/058997

(56) Documents cités:
- EP-A- 0 462 032
- EP-A- 0 669 376
- EP-A- 0 856 561
- FR-A- 2 320 324
- US-A- 4 585 830
- US-A- 4 785 047

## Description

### DOMAINE TECHNIQUE :

Le domaine de l'invention est celui des élastomères silicones obtenables par polyaddition et dont les principaux composants sont des polymères silicones et des charges.

Plus précisément, la présente invention est relative à la préparation d'un produit intermédiaire utile pour l'obtention de ces élastomères silicones et constituée par une suspension de charge renforçante dans un polyorganosiloxane porteur de fonctions Si-alcényle - de préférence Si-Vi susceptibles de réagir par polyaddition avec les fonctions réticulantes SiH d'un autre POS.

### ART ANTERIEUR :

On distingue des charges renforçantes et non renforçantes dans les caoutchoucs silicones.
Les charges renforçantes les plus couramment utilisées sont de préférence des silices pyrogénées ayant une surface BET > 50 m²/g. Elles doivent leur effet de renforcement d'une part à leur morphologie et d'autre part aux liaisons hydrogènes qui se forment entre les groupes silanols sur la surface des silices (3-4,5 groupes SiOH /mm²) et les chaines polyorganosiloxanes (POS). Ces interactions entre la charge et le polymère augmentent la viscosité et modifient le comportement du polymère au voisinage de la surface solide des charges. Par ailleurs, les liaisons entre polymères et charges améliorent les propriétés mécaniques mais peuvent également provoquer un durcissement prématuré préjudiciable (« structuration ») des compositions précurseurs des élastomères.
Les charges non renforçantes ont une interaction extrêmement faible avec le polymère silicone. Il s'agit par exemple de la craie, de la poudre de quartz, de la terre de diatomées, du mica, du kaolin, des alumines ou des oxydes de fer. Leur effet est souvent d'augmenter la viscosité des précurseurs non vulcanisés des élastomères, ainsi que la dureté shore et le module d'élasticité de ces derniers.

Les élastomères silicones peuvent également contenir, entre autres, des catalyseurs, des inhibiteurs, des réticulants, des pigments, des agents antiadhésifs, des plastifiants et des promoteurs d'adhérence.

Ces élastomères vulcanisables par polyaddition et dénommés également élastomères RTV, sont façonnés avant vulcanisation par coulée, extrusion, calandrage ou moulage par compression, par injection ou par transfert.

Les compositions silicones vulcanisables en élastomères, par polyaddition à température ambiante ou à des températures plus élevées (< généralement à 200° C), sont classiquement conditionnées sous forme de systèmes bicomposants, c'est-à-dire comprenant deux parties emballées séparément et devant être mélangées au moment de l'emploi.
Dans les systèmes bi-composants, l'un des composants comprend le catalyseur de la réaction de polyaddition. Ce catalyseur est de préférence de nature platinique. Il peut s'agir par exemple d'un complexe du platine tel que celui préparé à partir de l'acide chloroplatinique et de divinyl-1,3-tétraméthyle-1-1-3-3-disiloxane, selon le brevet US P 3 814 730 (catalyseur de Karstedt). D'autres complexes du platine sont décrits dans les brevets US P 3 159 601, 3 159 662 et 3 220 972.
Ce composant comportant le catalyseur peut comprendre également l'un seulement des POS de type I à fonctions de réticulation Si-alcényle, de préférence Si-Vinyle, ou seulement des POS de type II à fonction de réticulation SiH.
Généralement, les POS de type I et les POS de type II comprennent au moins deux groupements Si-Vi et SiH respectivement par molécule, de préférence en α,ω ; au moins l'un des deux devant comprendre au moins trois fonctions de réticulation par molécule.
Ces compositions comprennent de façon connue des POS de type I et II, un catalyseur platinique de réticulation par polyaddition et un inhibiteur du platine permettant aux compositions de ne vulcaniser qu'une fois sorties de l'emballage et mélangées, éventuellement après avoir été chauffées légèrement.
Comme exemples d'inhibiteurs on peut citer :
- les polyorganosiloxanes, avantageusement cycliques, substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques, (Cf. **FR-B-1 528 464** et **FR-A-2 372 874**).

De telles compositions peuvent aussi être présentées sous forme de systèmes monocomposants qui ne vulcanisent qu'après avoir été chauffés.

La préparation de suspensions concentrées (empâtages) de silices renforçantes dans des huiles silicones vinylées, destinées à produire des élastomères vulcanisables par réaction d'une molécule réticulante polyhydrogénée telle qu'un POS avec l'huile vinylée (addition SiH/SiVi), est largement répandue dans le domaine des élastomères silicones.

Les charges particulaires renforçantes les plus connues sont à base de silice, mais des substances telles que TiO₂, Al₂O₃, le kaolin, par exemple, peuvent également être utilisées dans certains cas.
Ces charges renforçantes ont une surface spécifique BET d'au moins 50 m²/g jusqu'à généralement 400 m²/g. Ce sont des poudres ultrafines qui peuvent être dispersées dans des huiles silicones, de préférence SiVi. Cette dispersion pose des problèmes de mélange de la charge pulvérulente avec l'huile et l'on doit particulièrement veiller à obtenir une distribution uniforme des charges dans la suspension.

Une autre difficulté à surmonter est liée à la rhéologie des suspensions préparées. En effet, il est clair que l'introduction dans l'huile silicone d'une charge particulaire pulvérulente de très faible granulométrie, induit nécessairement une augmentation notable de la viscosité. Or cette caractéristique, bien qu'elle accompagne l'obtention de bonnes propriétés mécaniques pour les élastomères silicones comprenant la suspension comme matière première, est préjudiciable à la manipulation et au façonnage de la suspension et des compositions silicones en contenant. Il est en effet plus commode de manipuler pour le moulage, l'extrusion ou le façonnage, des compositions fluides qui se prêtent aisément au pompage, à l'écoulement ou au mélange avec des additifs fonctionnels, entre autres.

La problématique ici considérée peut donc se résumer comme la recherche d'un compromis technique entre des spécifications, a priori antinomiques, pour les suspensions de charges particulaires fines dans les huiles silicones, à savoir : fine distribution des particules dans la matrice silicone - homogénéisation de la dispersion - adaptation de la rhéologie de la suspension aux contraintes de manipulation (processabilité) - propriétés mécaniques des élastomères silicones RTV.

La demande de brevet français N° 2 320 324 s'inscrit dans cette problématique et décrit un procédé de distribution homogène dans des polyorganosiloxanes de charge active fortement dispersée de surface spécifique BET d'au moins 50 m²/g, ce procédé étant caractérisé en ce que la charge est traitée durant l'incorporation, en présence d'eau, par un agent de modification ou agent de compatibilisation du type silazane, l'hexaméthyldisilazane étant particulièrement préféré. Les autres agents de compatibilisation cités sont le triméthylsilane, le triméthylchlorosilane, le triméthyléthoxysilane, les triorganosilyles mercaptans, les acylates de triorganosilyles ou les triorganosilyles amines. Selon ce procédé décrit dans cette demande antérieure on malaxe un polydiméthylsiloxane α,ω-triméthylsiloxy avec de l'hexaméthyldisilazane (HMDZ) et avec de l'eau. Une fois ce mélange homogénéisé, on y incorpore de la silice particulaire et on malaxe jusqu'à l'obtention d'un mélange homogène. On procède ensuite à un chauffage à 130° C pour éliminer par dévolatilisation l'excès d'HMDZ et d'eau. On laisse refroidir et on constate après mesure de la viscosité de la suspension obtenue que celle-ci est relativement élevée, ce qui bien sûr confère de hautes propriétés mécaniques aux élastomères susceptibles d'être préparés à partir de cette suspension, mais qui s'avère rhédibitoire sur le plan de la manipulation dans un contexte industriel. Ce traitement de comptabilisation de la silice avec l'huile silicone peut être qualifié de « précoce » puisque l'HMDZ est présent dès la mise en contact de la silice renforçante avec cette huile silicone. Le traitement de compatibilisation est un moyen de retarder ou d'empêcher la réaction entre la surface d'une charge renforçante et un polymère de siloxane. Cette interaction provoque ce que l'on appelle une structuration et il en résulte une perte d'aptitude de ces mélanges à la transformation.

On connaît également des procédés de préparation de suspension de silice renforçante dans des huiles silicones, dans lesquelles le traitement de compatibilisation à l'aide d'hexaméthyldisilazane, intervient après l'incorporation de la silice dans l'huile silicone. Ce mode de traitement est ici qualifié de « tardif ». Il fournit des suspensions relativement fluides qui peuvent présenter une tendance à la structuration dans le temps. Dans certains cas, les suspensions formées peuvent présenter une certaine tendance à la thixothropie. Cela n'est pas sans avoir de conséquences indésirables lors de la transformation et de la manipulation de ces suspensions, notamment pour leur débullage. En tout état de cause, il a pu être constaté que, quelles que soient les qualités rhéologiques des suspensions obtenues par traitement tardif à l'HMDZ, les propriétés mécaniques finales des élastomères préparés à partir desdites suspensions, sont perfectibles (dureté, contrainte à la rupture, allongement à la rupture, résistance à la déchirure). En particulier, elles n'atteignent pas le niveau de celles consatées das le cas de traitement précoce.

A titre d'illustration de ce type de traitement de compatibilisation, on peut mentionner la demande de brevet européen N° 0 462 032 qui décrit un procédé de préparation d'un empâtage utilisable notamment dans des compositions vulcanisables par réaction de polyaddition et permettant ainsi l'obtention d'élastomères silicones. Selon ce procédé, on injecte en continu et simultanément, dans une extrudeuse double-vis, au moins en quatre endroits différents :
- au moins une huile POS SiVi ,
- de l'eau,
- de la silice,
- un polysilazane liquide dans les conditions normales de température et de pression (HMDZ).
La silice est injectée en aval de l'huile et de l'eau et en amont de l'HMDZ, sans toutefois qu'il y ait mélange, d'une part, entre l'HMDZ et l'eau et, d'autre part, entre l'HMDZ et la silice, avant l'introduction d'HMDZ.

Le brevet américain N° 4 785 047 divulgue un traitement mixte de comptabilisation, à la frontière entre les traitements précoces et tardifs évoqués ci-dessus. Ce brevet concerne plus précisément un procédé de préparation d'élastomères silicones transparents. Ce document décrit des compositions liquides pompables, formées par des suspensions de charge silicique traitée à l'HMDZ, dans des huiles silicones porteuses ou non de fonctions de réticulation par polyaddition (SiH/SiVi).
La problématique mise en avant dans ce brevet est différente de celle de l'art antérieur présenté ci-dessus. Il s'agit ici en effet plutôt d'obtenir des élastomères transparents et pour ce faire, d'essayer de contrecarrer l'effet nuisible sur la transparence de la charge silicique par un traitement très poussée par l'HMDZ.
Selon le procédé objet de ce brevet, on mélange tout d'abord une partie de l'huile silicone avec la totalité de l'eau et de la silice mais seulement avec une fraction de l'HMDZ représentant systématiquement plus de 15 % en poids sec par rapport à la silice, à savoir 34 % et 26 % dans les exemples.
Après homogénéisation de ce premier mélange, on incorpore et on mélange à celui-ci l'HMDZ restant.
On procède ensuite au traitement de dévolatilisation pendant 1 heure à 150° C et sous pression réduite.
On mélange enfin pendant 1 heure, à température ambiante, le restant de l'huile silicone PDMS et PDMS α,ω-diVi.
La suspension silicone vulcanisable et transparente obtenue présente une viscosité comprise entre 200 et 10 000 Pa.s. à 25° C.
Cette proposition technique peut éventuellement apporter une solution au problème de la transparence mais s'avère non satisfaisante en ce qui concerne la viscosité de la suspension et sa manipulation.

### BREF EXPOSE DE L'INVENTION :

Dans une tel contexte technique, l'un des objectifs essentiel de la présente invention est de fournir un procédé de préparation d'une suspension d'une charge particulaire traitée à l'aide d'un agent de compatibilisation, dans une huile silicone, cette suspension pouvant être utile comme matière première pour l'élaboration de compositions vulcanisables par polyaddition en élastomère RTV.

Ce procédé se doit de satisfaire au cahier des charges suivant :
- uniformisation et homogénéisation de la distribution de la charge dans l'huile silicone,
- optimisation de la dispersion
- suspension s'écoulant bien (sans seuil d'écoulement) et viscosité adaptée à la manipulation et à la transformation de la suspension,
- propriétés mécaniques des élastomères d'un niveau acceptable.

Un autre objectif essentiel de l'invention est de fournir un procédé de préparation d'une suspension charge renforçante/huile silicone pour élastomères RTV, qui soit simple à mettre en oeuvre, économique et applicable à l'échelle industrielle.

Un autre objectif essentiel de l'invention est de fournir un procédé d'obtention d'une composition silicone, vulcanisable par polyaddition pour former un élastomère RTV et comprenant comme élément constitutif la suspension telle qu'obtenue par le procédé visé ci-dessus.

Ces objectifs, parmi d'autres, sont atteints par la présente invention qui concerne un procédé de préparation d'une suspension d'une charge particulaire, de préférence silicique, dans une matière formée par une huile silicone comprenant :
- des polyorganosiloxanes (POS) de type (I) porteurs des fonctions Si-alcényle - de préférence Si-Vinyle - aptes à réagir avec les fonctions réticulantes Si-H d'un POS de type II,
- éventuellement des POS de type (II) porteurs de fonctions de réticulation Si-H aptes à réagir avec les fonctions Si-alcényle des POS (I),
- et éventuellement des POS de type (III) différents des POS (I) et (II),
ladite suspension étant, notamment, utilisable pour produire des compositions silicones vulcanisables par polyaddition,
ce procédé étant du genre de ceux dans lesquels la charge particulaire est traitée à l'aide d'un agent de compatibilisation (AC),
caractérisé en ce qu'il consiste essentiellement à introduire de l'agent de compatibilisation (AC), dans le milieu de préparation :
- d'une part, avant et/ou sensiblement simultanément à la mise en présence d'au moins une partie de l'huile silicone mise en oeuvre avec au moins une partie de la charge particulaire utilisée, cette introduction d'AC s'opérant en une ou plusieurs fois pour une fraction d'AC correspondant à une proportion inférieure ou égale à 8 %, de préférence à 5 % et, plus préférentiellement encore, à 3 % en poids sec par rapport à la charge totale particulaire ;
- et d'autre part, après cette mise en présence POS/charge.

Il est du mérite des inventeurs d'avoir mis en évidence, après de nombreuses recherches et expérimentations, qu'il convenait de manière tout à fait surprenante et inattendue d'incorporer l'agent de compatibilisation (par exemple l'HMDZ) **avant et après** le mélange de la charge renforçante de préférence, silicique avec l'huile silicone, (de préférence de type (I) SiVi), **avec la condition selon laquelle,** la fraction d'agent de comptabilisation AC introduite avant le mélange POS/charge, correspond à moins de 5 % en poids de la charge renforçante totale.

Ces modalités originales et avantageuses permettent d'obtenir des suspensions douées de qualités rhéologiques et d'un comportement viscoélastique appropriés. En effet, ces suspensions n'ont pas de seuil d'écoulement ou un très faible seuil qui n'est pas préjudiciable aux applications. Cela favorise considérablement leur mise en oeuvre.
En particulier, elles ont une fluidité stable dans le temps et adaptée aux opérations de manipulation et de transformation, telles que le pompage, l'acheminement, le mélange, le façonnage, le moulage, l'extrusion, etc.

L'un des intérêts majeurs de l'invention est que cet acquis sur le plan de la rhéologie, n'existe pas au détriment des propriétés mécaniques finales de l'élastomère réticulé. Le compromis technique est atteint.

Par ailleurs, la méthodologie retenue permet d'obtenir de bonnes dispersions homogènes de la charge particulaire dans l'huile. De plus, cette méthodologie ne complique pas significativement le procédé, qui reste simple à mettre en oeuvre et peu onéreux.

### EXPOSE DETAILLE DE L'INVENTION :

Conformément à l'un de ces modes préférés de mise en oeuvre, le procédé selon l'invention consiste essentiellement
* à mélanger :
   - 100 parties en poids d'huile silicone
   - 0 à 5 parties en poids d'eau
   - 20 à 80 parties en poids de charge particulaire constituée par de la silice
   - 1 à 20 parties en poids d'agent de compatibilisation (AC), sélectionné parmi les silazanes, pris à eux seuls ou en mélange entre eux, de préférence parmi les disilazanes, l'hexaméthyldisilazane étant particulièrement préférés ;
* à laisser réagir, de préférence sous agitation,
* à chauffer le mélange obtenu, en choisissant un couple pression/température de telle sorte que se produise une dévolatilisation d'au moins une partie de l'eau et des éléments volatils ;
* à refroidir si nécessaire le mélange.

En d'autres termes, le procédé selon l'invention permet d'accéder à un contrôle de la viscosité de la suspension tout en maintenant à un niveau acceptable, - voire en améliorant - les propriétés mécaniques de l'élastomère final obtenu à partir de la suspension.

Le mélange est réalisé à l'aide de dispositifs connus et appropriés. Il peut s'agir par exemple :
- de mélangeurs à bras
- mélangeurs internes
- mélangeurs planétaires
- mélangeurs à pales en soc de charrue
- mélangeurs à double arbre co ou contra rotatif
- mélangeurs extrudeurs continus
- ou d'autres dispositifs discontinus ou continus.

L'opération de mélange s'effectue à température et à pression normales et de préférence sous atmosphère inerte (N₂). Il convient d'ailleurs que dans ces conditions, l'huile silicone, l'eau mais également l'agent de comptabilisation se trouvent sous forme liquide pour faciliter le mélange.

La charge renforçante de préférence silicique représente de 10 à 50 % en poids de la suspension. En pratique, cette charge est de l'ordre de 30 ± 10 %.

Avantageusement, la proportion d'agent de comptabilisation introduite dans un premier temps est au plus égale à 8 % de la charge renforçante (et par exemple comprise entre 1 et 3 % de la charge renforçante, de préférence entre 1 et 2 %). Par ailleurs, on peut indiquer que la quantité totale d'agent de comptabilisation AC est, de préférence, comprise entre 5 et 30 % de la charge silicique, de préférence entre 10 et 20 %. Les proportions d'agent AC introduites avant et après le mélange charge/huile sont respectivement (5-25) de préférence (10 - 20 %).

Pour définir plus précisément, sans toutefois que cela ne soit limitatif, le mode préféré de mise en oeuvre du procédé selon l'invention, on peut indiquer que celui-ci comprend les étapes suivantes :
- on mélange - de préférence sous atmosphère de gaz inerte (e.g. N₂) - tout ou partie de l'huile silicone, l'eau et tout ou partie de la charge silicique particulaire, avec une première fraction d'AC comprise entre 1 et 3 % en poids sec par rapport à la silice,
- on incorpore au mélange une deuxième fraction d'AC représentant entre 10 et 15 % en poids sec de la silice,
- éventuellement, on ajoute les restes d'huile silicone et de silice,
- on laisse réagir de préférence en poursuivant le mélange,
- on dévolatilise, de préférence sous atmosphère de gaz inerte (e.g. N₂),
- on laisse éventuellement refroidir le mélange dévolatilisé
- et on complète éventuellement la suspension avec les restes d'huile silicone.

Suivant un premier mode particulier de mise en pratique du procédé de l'invention, celui-ci comprend les étapes suivantes :
- 1 - on procède à l'homogénéisation d'un mélange comprenant l'huile silicone, l'eau et la première fraction d'AC - de préférence d'HMDZ,
- 2 - on ajoute progressivement la charge particulaire de préférence la silice, au mélange obtenu en 1,
- 3 - on poursuit le mélange,
- 4 - on incorpore progressivement au mélange obtenu en 3, la deuxième fraction d'AC - de préférence l'HMDZ -
- 5 - on poursuit le mélange,
- 6 - on dévolatilise, de préférence par chauffage à une température ≥ 100° C.

Dans l'étape 1 de ce premier mode de mise en pratique, on a le choix entre les trois alternatives suivantes, parmi d'autres :
a) soit on met en oeuvre toute l'huile et toute la silice ainsi que la fraction de départ d'AC,
b) soit on met en oeuvre toute l'huile, une partie de la silice et la fraction de départ d'AC,
c) soit on met en oeuvre toute la silice, une partie de l'huile et la fraction de départ d'AC.

Selon un deuxième mode particulier de mise en pratique du procédé de l'invention, ce dernier comprend les étapes suivantes
- 1' - on procède à l'homogénéisation de l'huile silicone et de l'eau
- 2' - on incorpore progressivement dans le mélange obtenu en 1, la charge particulaire - de préférence la silice - et simultanément la première fraction d'AC - de préférence l'HMDZ ;
- 3 - on poursuit le mélange,
- 4 - on incorpore progressivement au mélange obtenu en 3, la deuxième fraction d'AC - de préférence d'HMDZ -
- 5 - on poursuit le mélange,
- 6 - on dévolatilise, de préférence par chauffage à une température ≥ 100° C.

La caractéristique de ce deuxième mode est liée au fait que l'on procède à une co-addition de la charge renforçante particulaire et de son agent de comptabilisation. On peut donc imaginer réaliser un pré-mélange de ces deux constituants ou alternativement une introduction concomitante de ceux-ci. L'incorporation progressive de l'étape 2' peut être effectuée de manière continue ou fractionnée.

Selon une variante de ce deuxième mode de mise en pratique,
- 1" - on charge l'huile silicone,
- 2" - on incorpore progressivement et simultanément dans l'huile, la charge particulaire - de préférence la silice - la première fraction d'AC - de préférence l'HMDZ - et l'eau
- 3 - on poursuit le mélange,
- 4 - on incorpore progressivement au mélange obtenu en 3, la deuxième fraction d'AC - de préférence d'HMDZ -
- 5 - on poursuit le mélange,
- 6 - on dévolatilise, de préférence par chauffage à une température ≥ 100° C.

Suivant une disposition avantageuse de l'invention correspondant au cas dans lequel la charge renforçante est de la silice et l'agent AC de l'HMDZ, on met en oeuvre une quantité d'HMDZ suffisante pour que le taux de surface de la silice en motif Si(Me)₃ soit ≥ à 1 motif Si(Me)₃ par mm² et de préférence compris entre 1 et 2 motifs Si(Me)₃ par mm².

Suivant un troisième mode de mise en oeuvre de l'invention, le procédé qu'elle concerne est caractérisé :
■ en ce que la première fraction d'AC est remplacée en tout ou partie par au moins un auxiliaire de mise en oeuvre,
   choisi parmi les molécules et les associations de molécules :
   - capables d'interagir avec la charge particulaire en particulier avec le silicium dans le cas où il s'agit d'une charge siliceuse au détriment des liaisons hydrogène que cette charge particulaire entretient notamment entre ses propres atomes et/ou avec ceux de l'huile silicone,
   - et aptes à être éliminées du milieu de préparation par dévolatilisation ;
■ et en ce que l'on fait en sorte que cet auxiliaire de mise en oeuvre soit en présence d'eau dans le milieu de préparation.

Conformément à ce troisième mode de mise en oeuvre, il est préférable que l'auxiliaire de mise en oeuvre soit aisément éliminable du milieu de préparation. A cette fin, il est intéressant qu'il se prête bien à une élimination par dévolatilisation, par exemple par chauffage sous vide ou sous courant gazeux. Dans ces conditions, il est clair que les molécules de bas poids moléculaire seront préférées, à titre d'auxiliaire de mise en oeuvre.

Avantageusement, on choisit l'auxiliaire de mise en oeuvre dans le groupe comprenant :
- les silazanes, l'HMDZ étant préféré ;
- les siloxanes hydroxylés di ou de préférence monofonctionnels ;
- les amines, de préférence l'ammoniaque et/ou les alkylamines, la diéthylamine étant particulièrement préférée ;
- les acides organiques, les acides formique et/ou acétique étant préférés ;
- et leurs mélanges.

Comme indiqué ci-dessus, les produits plus particulièrement sélectionnés à titre d'auxiliaire de mise en oeuvre sont ceux dotés d'un faible poids moléculaire. Ceci se vérifie notamment pour les amines et les acides organiques sus-mentionnés.

S'agissant des produits mis en oeuvre dans le procédé selon l'invention, on peut indiquer que pour l'huile silicone on choisira, de préférence, des polydiorganosiloxanes linéaires ou cycliques mais plutôt linéaires.

Pour ce qui concerne les POS (I), il s'agira d'huile polydiorganosiloxane porteur de Si-alcényle en particulier de Si-vinyle dans et/ou aux extrémités de la chaîne. En pratique, on peut citer par exemple le polydialkyle (méthyle) siloxane, α,ω-divinylé. De préférence, le POS (I) utilisé pour la préparation de la suspension est un POS (I) vinylé porteur d'au moins deux motifs SiVi par molécule, de préférence au moins trois par molécule, quand le POS (II) ne comporte que deux motifs SiH par molécule.

Le POS (II) est quant à lui choisi parmi les polyorganohydrogénosiloxanes comprenant au moins deux motifs SiH par molécule, de préférence au moins trois quand le POS (I) ne comprend que deux SiVi par molécule. En pratique, on citera par exemple le polyalkyl(méthyl)hydrogénosiloxane ou bien encore des POS hydrogénés ramifiés comportant des motifs tri ou tétrafonctionnels et des motifs porteurs de SiH.

Le POS (III) peut être un polydiorganosiloxane, tel qu'un polyalkyl de préférence polydiméthylsiloxane à extrémités triméthylsilyles.

Les huiles silicones (I, II, III) préférées comprennent essentiellement des motifs R₂ SiO, les symboles R, identiques ou différents, représentant des groupements (cyclo)alkyles en C₁-C₄ éventuellement halogénés, des groupements aryles éventuellement substitués ou halogénés.

A titre de groupements :
- alkyle : on peut citer notamment les groupements méthyles, éthyles propyles et butyles,
- alkyle halogéné : on peut citer le 3-3-trifluoropropyle,
- cyclo alkyle : on peut citer le cyclo-hexyle
- aryle : on peut citer le groupement phényle.

De préférence, au moins 85 % des groupements R représentent des groupements méthyles.

La silice utilisée dans le procédé selon la présente invention est une silice de renforcement dont la surface spécifique est comprise de préférence entre 50 et 400 m²/g. Ces silices peuvent être des silices de précipitation, mais on emploie plus généralement des silices de combustion. Le fait que la silice soit préférée n'exclut pas le recours à d'autres types de charge renforçante connue.

AC est de préférence un silazane et plus préférentiellement encore un disilazane. Il s'agit d'un produit liquide dans les conditions normales de température et de pression (23° C - 760 mmHg).

La viscosité de la suspension est l'un des paramètres déterminant qui régit le procédé selon l'invention. Ainsi, conformément à une disposition avantageuse de ce dernier :
- on met en oeuvre une huile silicone alcénylée - de préférence vinylée - comprenant au moins deux groupemements Si-alcényle par molécule de préférence situés chacun à une extrémité de la chaîne et de viscosité dynamique à 25° C, inférieure ou égale à 250 Pa.s, de préférence à 100 Pa.s et plus préférentiellement encore à 10 Pa.s,
- on choisit une silice de surface spécifique BET comprise entre 50 et 400 m²/g et des conditions de mélange telles que la viscosité dynamique, à 25° C, de la suspension soit inférieure ou égale à 300 Pa.s, de préférence à 250 Pa.s et plus préférentiellement encore à 200 Pa. s.

### APPLICATION INDUSTRIELLE :

La vocation de la suspension charge renforçante/huile silicone préparée conformément à l'invention est d'être utilisée dans l'obtention de compositions silicones liquides ou pâteuses, vulcanisables par polyaddition de préférence, en élastomère silicone RTV dans l'atmosphère ambiante à température normale ou à température plus élevée.

C'est ainsi que selon un autre de ces aspects, la présente invention concerne un procédé d'obtention d'une composition silicone vulcanisable par polyaddition, caractérisé en ce qu'il consiste à mélanger les produits suivants :
- A - suspension telle que préparée selon le procédé tel que défini supra,
- B - un ou plusieurs POS (I) tel que défini supra,
- C - un ou plusieurs POS (II) tel que défini supra,
- D - éventuellement un ou plusieurs POS (III), tel que défini supra, utile(s) comme diluant(s)
- E - un système catalytique comprenant un catalyseur, de préférence de nature platinique, et éventuellement un inhibiteur ou ralentisseur.

Selon une première variante de ce procédé :
- on produit la composition, sous forme de système bi-composants C₁ et C₂ destinés à mettre mis en contact l'un à l'autre pour produire un élastomère réticulé par polyaddition entre les POS (I) et (II),
- et on fait en sorte que l'une seulement des parties C₁ ou C₂ contienne du catalyseur D et éventuellement l'un ou l'autre des POS (I) et (II).

Suivant une deuxième variante de ce procédé de préparation de compositions liquides, vulcanisables, on réalise un système monocomposant destiné à réticuler à l'air ambiant et/ou sous l'effet de la température.

Ces compositions vulcanisables précurseurs d'élastomères, peuvent également comprendre un ou plusieurs additifs fonctionnels F, tels que par exemple une charge non renforçante formée par de la craie, de la poudre de quartz, de la terre de diatomées, du mica, du kaolin, des alumines ou des oxydes de Fer. Ces éventuels additifs F peuvent être également constitués par des pigments, des agents antiadhésifs, des plastifiants ou des modificateurs de rhéologie, des stabilisant ou des promoteurs d'adhérence.

Les exemples qui suivent illustrent :
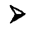 la préparation des suspensions de charge renforçante dans des huiles silicones conformément à l'invention,
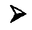 l'application de ces suspensions comme matière première pour l'obtention de compositions bi-composantes et vulcanisables en élastomères silicones RTV
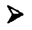 ainsi que l'évaluation des propriétés viscoélastiques des suspensions et des propriétés mécaniques des élastomères réticulés obtenus à partir desdites suspensions.
Deux modes de mise en oeuvre du procédé de l'invention sont donnés dans les exemples. Ces derniers comprennent également des exemples comparatifs de préparation de suspensions conformément à l'art antérieur selon des modes de traitement de compatibilisation de type « tardif » et de type « précoce ».

### EXEMPLES

### EXEMPLE COMPARATIF 1 : TRAITEMENT TARDIF

Dans un mélangeur à bras de 1,5 1 on introduit 750 g d'huile PolyDiMéthylSiloxane (PDMS) α,ω divinylée de viscosité 0,6 Pa.s et 21 g d'eau. Après homogénéisation on rajoute par portions en 70 min, 321 g d'une silice de combustion caractérisée par sa surface spécifique de 300m²/g. Après 120 min de mélangeage on rajoute en 90 min 66 g d'hexaméthyldisilazane. 60 min plus tard commence une phase de chauffage au cours de laquelle le mélange est placé sous courant d'azote (250L/h) quand la température atteint 80°C ; le chauffage continue jusqu'à atteindre environ 155°, température palier qui est maintenue pendant 2 h. Après refroidissement on rajoute 43 g de l'huile vinylée et on homogénéise la suspension.
Partant de cette suspension on formule une partie A et une partie B.
La partie A contient :
90,6 g de la suspension.
1,58 g de l'huile PDMS α,ω divinylée décrite
5,48 g d'une huile PDMS α,ω dihydrogéno qui titre 1,9 meq SiH par gramme d'huile,
2,35 g d'une huile PDMS polyhydrogéno de viscosité 30 mPa.s, qui titre 1,6 meq SiH par gramme d'huile.
La partie B contient :
11 g de la suspension
29 g de l'huile PDMS α,ω divinylée décrite ci-dessus,
9,77 g d'une huile PDMS α,ω divinylée qui titre 0,05 meq Vi par gramme d'huile.
70 µL d'un catalyseur de Karstedt dosé à 12 % de platine
90 µL de divinyltétraméthyldisiloxane
140 µL de tétravinyltétraméthylcyclotétrasiloxane.
Les parties A et B sont mélangées dans le rapport de 100 à 10 et après débullage on prépare des plaques de 2 mm d'épaisseur d'élastomères. Ces moulages sont vulcanisés en étuve ventilée pendant 1 heure à 150° C. Les éprouvettes nécessaires à la mesure des propriétés mécaniques sont découpées dans ces plaques d'élastomère vulcanisé.

### EXEMPLE 2 : TRAITEMENT PRECOCE

L'exemple précédent est reproduit à ceci près qu'on commence par charger les 750 g d'huile PDMS α,ω divinylée, les 21 g d'eau et les 66 g d'hexaméthylsisilazane. Après 10 min d'agitation, la silice est incorporée par portions en 30 min ; le malaxage est poursuivi pendant encore 120 min avant de démarrer la phase de chauffage qui est la même que précédemment.
La suspension est formulée comme dans l'exemple 1.

### Propriétés comparatives des suspensions et des élastomères vulcanisés selon les exemples 1 et 2

On mesure la viscosité des suspensions au moyen d'un rhéomètre dynamique équipé dans une géométrie cone-plan. On prend la viscosité complexe à 1Hz sous 1Pa comme représentative du comportement viscoélastique des suspensions.
Les propriétés mécaniques sont mesurées selon les normes en vigueur :
- DIN 53 505 pour la mesure de dureté,
- AFNOR T46002 pour les mesures de rupture.

| | **viscosité dynamique Pa.s** | **dureté Shore A pts** | **contrainte rupture MPa** | **allongement rupture %** |
|---|---|---|---|---|
| **exemple 1** | 13 | 38 | 6,1 | 390 |
| **exemple 2** | 3000 | 35 | 6,9 | 560 |

Dans le cas de l'exemple 1, la viscosité est basse mais les propriétés en rupture de l'élastomère sont modestes. S'agissant de l'exemple 2, on affiche de meilleures propriétés en rupture, mais au prix d'une viscosité importante.

### EXEMPLE 3 : TRAITEMENT EN DEUX TEMPS

Dans un mélangeur à bras de 100 L, on introduit 40 kg d'huile α,ω divinylée de viscosité 2Pa.s 0,27 kg d'hexaméthyldisilazane et 0,27 kg d'eau. Après homogénéisation, on rajoute par portions en 100 min 16,2 kg d'une silice de combustion caractérisée par sa surface spécifique de 200m²/g. Après 60 min de mélangeage on rajoute en 60 min 1,9 kg d'hexaméthyldisilazane. 120 min plus tard commence une phase de chauffage au cours de laquelle le mélange est placé sous courant d'azote (30m³/h) ; le chauffage continue jusqu'à atteindre environ 140°, température palier qui est maintenue pendant 2 h. La suspension est alors laissée à refroidir.
Partant de cette suspension, on formule une partie A et une partie B.
La partie A contient :
427 g de la suspension.
10 g d'une huile PDMS polyvinylée de viscosité 0,4 Pa.s qui titre 0,11 méq Vi par gramme d'huile.
25 g d'huile à terminaisons triméthyte de viscosité 0,1 Pa.s.
26,5 g d'une huile PDMS α,ω dihydrogéno qui titre 1,9 meq SiH par gramme d'huile.
11,3 g d'une huile PDMS polyhydrogéno de viscosité 30 mPa.s qui titre 1,6 meq SiH par gramme d'huile.
La partie B contient :
180 g de la suspension
20 g de l'huile à terminaisons méthyle décrite
250 µL d'un catalyseur de Karstedt dosé à 12 % de platine
1 mL de tétravinyltétraméthylcyclotétrasiloxane.
Les parties A et B sont mélangées dans le rapport de 100 à 10 et après débullage on prépare les éprouvettes nécessaires à la mesure des propriétés mécaniques comme explicité aux exemples comparatifs 1 et 2.

### EXEMPLE 4 : TRAITEMENT EN DEUX TEMPS AVEC COADDITION DES REACTIFS

L'exemple précédent est reproduit à ceci près qu'on charge tout d'abord les 40 kg d'huile PDMS α,ω divinylée et les 0,27 Kg d'eau. Après 10 min d'agitation, la silice est incorporée par portions en 120 min simultanément à 0,27 kg d'hexaméthyldisilazane que l'on répartit en fonction des portions de silice. A l'issue de cette phase de coaddition de la silice et de l'hexaméthyldisilazane le processus est poursuivi comme précédemment.
La suspension est formulée comme dans l'exemple 3.

### Propriétés des suspensions et des élastomères vulcanisés selon les exemples 3 et 4

On mesure la viscosité des suspensions au moyen d'un rhéomètre dynamique équipé dans une géométrie cone-plan. On prend la viscosité complexe à 1 Hz sous 1 Pa et la contrainte seuil pour laquelle les modules élastiques et visqueux sont égaux comme représentatives du comportement viscoélastique des suspensions.
Les propriétés mécaniques sont mesurées selon les normes en vigueur.

| | **viscosité dynamique Pa.s** | **contrainte seuil Pa** | **dureté Shore A pts** | **contrainte déchirure N/mm** |
|---|---|---|---|---|
| **exemple 3** | 165 | 25 | 34 | 21 |
| **exemple 4** | 150 | 1 | 36 | 18 |

Les exemples 3 et 4 montrent que les élastomères préparés à partir des suspensions Huile/silice obtenues conformément à l'invention, ont une rhéologie à très faible seuil d'écoulement et de viscosité modérée. Ce comportement rhéologique très favorable s'accompagne d'une excellente résistance à la déchirure.

### EXEMPLE 5 : TRAITEMENT EN DEUX TEMPS PAR L'HEXAMETHYLDISILAZANE

### Préparation de la suspension

Dans un mélangeur à bras de 7 L on introduit 2120 g d'un mélange d'huiles α,ω divinylées de viscosité 1,5 Pa.s, 12,6 g d'eau et 12,6 g d'hexaméthyldisilazane. Après homogénéisation on rajoute par portions en 110 min 765 g d'une silice de combustion caractérisée par sa surface spécifique de 200 m²/g. On rajoute alors en 60 min 80 g d'hexaméthyldisilazane. 120 min plus tard commence une phase de chauffage au cours de laquelle le mélange est placé sous vide quand la température atteint 70° C ; le chauffage continue jusqu'à atteindre environ 150° C, température palier qui est maintenue pendant 1 h. On refroidit alors sous courant d'azote (≈ 250 L/h) et on vidange l'appareil.
Partant de cette suspension on formule une partie A et une partie B.
La partie A contient :
946,7 g de la suspension
42,7 g d'une huile α,ω dihydrogéno qui titre 1,9 meq SiH par gramme d'huile
10,7 g d'une huile polyhydrogéno qui titre 1,6 meq SiH par gramme d'huile
La partie B contient :
22 g de la suspension
20 g d'une huile α,ω divinylée qui titre 0,15 meq Vi par gramme d'huile
58 g d'une huile α,ω divinylée qui titre 0,05 meq Vi par gramme d'huile
140 µL d'un catalyseur de Karstedt dosé à 10 % de platine
0,15 g de divinyltétraméthyldisiloxane
0,35 g de tétravinyltétraméthylcylotétrasiloxane.
Les parties A et B sont mélangées dans le rapport de 100 à 10 et après débullage on prépare les éprouvettes nécessaires à la mesure des propriétés mécaniques.

### EXEMPLE 6 : TRAITEMENT AVEC PREMIERE PHASE ACIDE

L'exemple précédent est reproduit à ceci près que les 12,6 g correspondant à la première portion d'hexaméthyldisilazane sont remplacés par 3,6 g d'acide formique. Toutes les autres opérations sont conduites comme précédemment.
La suspension est formulée comme dans l'exemple 5.

### EXEMPLE 7 : TRAITEMENT AVEC PREMIERE PHASE BASIQUE

L'exemple 5 est à nouveau reproduit à ceci près que les 12,6 g correspondant à la première portion d'hexaméthyldisilazane sont remplacés par 4,2 g d'ammoniaque titrant 32 % d'ammoniac. Toutes les autres opérations sont conduites comme précédemment.
La suspension est formulée comme dans l'exemple 5.

### EXEMPLE 8 : EVALUATION DES PROPRIETES COMPARATIVES DES SUSPENSIONS DES EXEMPLES 5 A 7

On mesure la viscosité des suspensions au moyen d'un rhéomètre dynamique équipé dans une géométrie cone-plan. On prend comme représentatives du comportement viscoélastique des suspensions :
- la viscosité complexe et ses composantes élastiques et visqueuses à 1 Hz sous 1 Pa
- la contrainte seuil pour laquelle les modules élastiques et visqueux sont égaux.
Les propriétés mécaniques sont mesurées selon les normes en vigueur.

| | Exemple 5 | Exemple 6 Acide | Exemple 7 Base |
|---|---|---|---|
| Viscosité complexe | 41 | 38 | 42 |
| Taux d'élasticité | 0,68 | 0,65 | 0,73 |
| Seuil d'écoulement | < 1 | < 1 | < 1 |
| Dureté Shore A | 28 | 35 | 32 |
| Allongement rupture | 700 | 400 | 610 |
| Résistance rupture | 6,8 | 6,3 | 8,0 |
| Résistance déchirure | 29 | 21 | 23 |

On observe aisément que le comportement rhéologique des suspensions est dans les trois cas typique d'un produit s'écoulant bien et que ces suspensions permettent la réalisation d'élastomères à bonnes propriétés mécaniques.

## Revendications

1. Procédé de préparation d'une suspension d'une charge particulaire silicique, dans une matière formée par une huile silicone comprenant :
- des polyorganosiloxanes (POS) de type (I) porteurs des fonctions Si-alcényle - de préférence Si-Vinyle - aptes à réagir avec les fonctions réticulantes Si-H d'un POS de type II,
- éventuellement des POS de type (II) porteurs de fonctions de réticulation Si-H aptes à réagir avec les fonctions Si-alcényle des POS (I),
- et/ou éventuellement des POS de type (III) différents des POS (I) et (II),
ladite suspension étant, notamment, utilisable pour produire des compositions silicones vulcanisables par polyaddition,
ce procédé étant du genre de ceux dans lesquels la charge particulaire est traitée à l'aide d'un agent de compatibilisation (AC), et étant **caractérisé en ce qu'**il consiste essentiellement :
a) à introduire une première fraction d'AC comprise entre 1 et 3 % en poids sec par rapport à la silice, dans le milieu de préparation avant et/ou sensiblement simultanément à la mise en présence d'au moins une partie de l'huile silicone mise en oeuvre avec au moins une partie de la charge particulaire utilisée, cette introduction de l'agent de compatibilisation s'opérant en une ou plusieurs fois pour cette première fraction d'AC ; et
b) à introduire, après cette mise en présence POS/charge, une deuxième fraction d'AC représentant entre 10 et 15 % en poids sec de la silice ;
c) cet agent de compatibilisation étant :
- s'agissant de la première fraction dudit agent : sélectionné parmi un silazane, un siloxane hydroxylé, une amine, une alkyle-amine, un acide organique et leurs mélanges, avec la condition supplémentaire selon laquelle on fait en sorte que cet agent de comptabilisation soit en présence d'eau dans le milieu de préparation, et
- s'agissant de la seconde fraction dudit agent : un silazane.

2. Procédé selon la revendication 1, **caractérisé en ce que** :
- on mélange tout ou partie de l'huile silicone, l'eau et tout ou partie de la charge silicique particulaire, avec la première fraction d'AC,
- on incorpore au mélange la deuxième fraction d'AC,
- éventuellement, on ajoute les restes d'huile silicone et de silice,
- on laisse réagir en poursuivant le mélange,
- on dévolatilise,
- on laisse éventuellement refroidir le mélange dévolatilisé,
- et on complète éventuellement la suspension avec les restes d'huile silicone.

3. Procédé selon la revendication 2, **caractérisé en ce que** :
- 1 - on procède à l'homogénéisation d'un mélange comprenant l'huile silicone, l'eau et la première fraction d'AC,
- 2 - on ajoute progressivement la charge particulaire à base de silice, au mélange obtenu en 1,
- 3 - on poursuit le mélange,
- 4 - on incorpore progressivement au mélange obtenu en 3, la deuxième fraction d'AC,
- 5 - on poursuit le mélange,
- 6 - on dévolatilise par chauffage à une température ≥ 100° C.

4. Procédé selon la revendication 2, **caractérisé en ce que** :
- 1' - on procède à l'homogénéisation de l'huile silicone et de l'eau,
- 2' - on incorpore progressivement dans le mélange obtenu en 1, la charge particulaire et simultanément la première fraction d'AC ;
- 3 - on poursuit le mélange,
- 4 - on incorpore progressivement au mélange obtenu en 3, la deuxième fraction d'AC,
- 5 - on poursuit le mélange,
- 6 - on dévolatilise par chauffage à une température ≥ 100° C.

5. Procédé selon la revendication 2, **caractérisé en ce que** :
- 1" - on charge l'huile silicone,
- 2" - on incorpore progressivement et simultanément dans l'huile, la charge particulaire, la première fraction d'AC et l'eau,
- 3 - on poursuit le mélange,
- 4 - on incorpore progressivement au mélange obtenu en 3, la deuxième fraction d'AC,
- 5 - on poursuit le mélange,
- 6 - on dévolatilise par chauffage à une température ≥ 100° C.

6. Procédé selon l'une des revendications précédentes dans lequel l'agent de compatibilisation est :
- s'agissant de la première fraction d'AC : sélectionné parmi l'HMDZ, un siloxane hydroxylé monofonctionnel, l'amoniaque, la diéthylamine, l'acide formique, l'acide acétique et leurs mélanges,
- s'agissant de la seconde fraction d'AC : l'HMDZ.

7. Procédé selon l'une quelconque des revendications 1 à 6, **caractérisé en ce que** l'on met en oeuvre une huile silicone alcénylée - de préférence vinylée - comprenant au moins deux groupements Si-alcényle par molécule, de préférence situés chacun à une extrémité de la chaîne, et de viscosité dynamique à 25°C, inférieure ou égale à 250 Pa.s, de préférence à 100 Pa.s et plus préférentiellement encore à 10 Pa.s,
et **en ce que** l'on choisit une silice de surface spécifique BET comprise entre 50 et 400 m²/g et des conditions de mélange telles que la viscosité dynamique à 25° C de la suspension soit inférieure ou égale à 300 Pa.s, de préférence à 250 Pa.s et plus préférentiellement encore à 200 Pa.s.

8. Procédé d'obtention d'une composition silicone vulcanisable par polyaddition **caractérisé en ce qu'**il consiste à mélanger les produits suivants :
- A - suspension telle que préparée selon le procédé tel que défini dans l'une quelconque des revendications 1 à 7 ;
- B - un ou plusieurs POS (I) tel que défini dans la revendication 1,
- C - un ou plusieurs POS (II) tel que défini dans la revendication 1,
- D - éventuellement un ou plusieurs POS (III), tel que défini dans la revendication 1 utile(s) comme diluant(s),
- E - un système catalytique comprenant un catalyseur, de préférence de nature platinique, et éventuellement un inhibiteur.

9. Procédé selon la revendication 8, **caractérisé**
- **en ce que** l'on produit la composition sous forme de système bi-composants C₁ et C₂ destinés à mettre mis en contact l'un à l'autre pour produire un élastomère réticulé par polyaddition entre les POS (I) et (II),
- et **en ce que** l'on fait en sorte que l'une seulement des parties C₁ ou C₂ contienne du catalyseur D et éventuellement l'un ou l'autre des POS (I) et (II).

## Patentansprüche

1. Verfahren zur Herstellung einer Suspension von einer teilchenförmigen Kieselsäurecharge in einem Material, gebildet durch ein Siliconöl, umfassend
- Polyorganosiloxane (POS) vom Typ (I) als Träger von Funktionen Si-Alkenyl, vorzugsweise Si-Vinyl, die fähig sind, mit den vernetzenden Funktionen Si-H eines POS vom Typ (II) zu reagieren,
- gegebenenfalls POS vom Typ (II) als Träger von vernetzenden Funktionen Si-H, die fähig sind, mit den Funktionen Si-Alkenyl der POS (I) zu reagieren, und/oder
- gegebenenfalls POS vom Typ (III), die sich von den POS (I) und POS (II) unterscheiden,
wobei die genannte Suspension insbesondere verwendbar ist zur Herstellung von Silicon-Zusammensetzungen, die durch Polyaddition vulkanisierbar sind,
und wobei dieses Verfahren von der Art ist, bei der die teilchenförmige Charge mit Hilfe eines Kompatibilisierungsmittels (AC) behandelt wird, und **dadurch gekennzeichnet ist, daß** es im wesentlichen besteht aus:
a) Eintragen einer ersten Fraktion von AC zwischen 1 und 3 Gew.-% trocken, bezogen auf die Kieselsäure, in das Medium zur Herstellung vor und/oder etwa gleichzeitig mit dem Zusammenbringen von mindestens einem Teil des eingesetzten Siliconöles mit mindestens einem Teil der verwendeten teilchenförmigen Charge, wobei dieses Eintragen des Kompatibilisierungsmittels einmal oder mehrmals für diese erste Fraktion des AC erfolgt; und
b) Eintragen nach diesem ersten Zusammenbringen POS/Charge von einer zweiten Fraktion von AC, die zwischen 10 und 15 Gew.-% trocken der Kieselsäure ausmacht,
c) wobei dieses Kompatibilisierungsmittel:
- wenn es sich um die erste Fraktion des genannten Mittels handelt: ausgewählt wird unter einem Silazan, einem hydroxylierten Siloxan, einem Amin, einem Alkylamin, einer organischen Säure und ihren Mischungen, mit der zusätzlichen Bedingung, gemäß der man in der Weise verfährt, daß dieses Kompatibilisierungsmittel in Anwesenheit von Wasser in dem Herstellungsmedium vorliegt, und
- wenn es sich um die zweite Fraktion des genannten Mittels handelt: ein Silazan ist.

2. Verfahren nach Anspruch 1, **dadurch gekennzeichnet, daß** man
- ganz oder teilweise das Siliconöl, das Wasser und ganz oder teilweise die teilchenförmige Kieselsäurecharge mit der ersten Fraktion des AC vermischt,
- zu der Mischung die zweite Fraktion des AC gibt,
- gegebenenfalls den Rest des Siliconöles und der Kieselsäure zusetzt,
- reagieren läßt, indem man das Mischen fortsetzt,
- die flüchtigen Anteile entfernt,
- gegebenenfalls die von den flüchtigen Anteilen befreite Mischung abkühlen läßt, und
- gegebenenfalls die Suspension mit den Resten des Siliconöles vervollständigt.

3. Verfahren nach Anspruch 2, **dadurch gekennzeichnet, daß** man
- 1 - die Homogenisierung einer Mischung vornimmt, die das Siliconöl, das Wasser und die erste Fraktion des AC umfaßt,
- 2 - nach und nach die teilchenförmige Charge auf der Basis von Kieselsäure zu der in 1 erhaltenen Mischung gibt,
- 3 - das Mischen fortsetzt,
- 4 - nach und nach zu der in 3 erhaltenen Mischung die zweite Fraktion des AC gibt,
- 5 - das Mischen fortsetzt,
- 6 - die flüchtigen Anteile durch Erhitzen auf eine Temperatur ≥ 100 °C entfernt.

4. Verfahren nach Anspruch 2, **dadurch gekennzeichnet, daß** man
- 1' - die Homogenisierung von Siliconöl und Wasser vornimmt,
- 2' - nach und nach zur der in 1 erhaltenen Mischung die teilchenförmige Charge und gleichzeitig die erste Fraktion des AC gibt,
- 3 - das Mischen fortsetzt,
- 4 - nach und nach zur der in 3 erhaltenen Mischung die zweite Fraktion des AC gibt,
- 5 - das Mischen fortsetzt,
- 6 - die flüchtigen Anteile durch Erhitzen auf eine Temperatur ≥ 100 °C entfernt.

5. Verfahren nach Anspruch 2, **dadurch gekennzeichnet, daß** man
- 1" - das Siliconöl einträgt,
- 2" - nach und nach und gleichzeitig zu dem Siliconöl die teilchenförmige Charge, die erste Fraktion des AC und Wasser gibt,
- 3 - das Mischen fortsetzt,
- 4 - nach und nach zur der in 3 erhaltenen Mischung die zweite Fraktion des AC gibt,
- 5 - das Mischen fortsetzt,
- 6 - die flüchtigen Anteile durch Erhitzen auf eine Temperatur ≥ 100 °C entfernt.

6. Verfahren nach einem der vorstehenden Ansprüche, worin das Kompatibilisierungsmittel ist:
- wenn es sich um die erste Fraktion des AC handelt: ausgewählt unter HMDZ, einem monofunktionellen hydroxylierten Siloxan, Ammoniak, Diethylamin, Ameisensäure, Essigsäure und ihren Mischungen,
- wenn es sich um die zweite Fraktion des AC handelt: HMDZ.

7. Verfahren nach irgendeinem der Ansprüche 1 bis 6, **dadurch gekennzeichnet, daß** man ein alkenyliertes, vorzugsweise vinyliertes Siliconöl einsetzt, umfassend mindestens zwei Gruppen Si-Alkenyl pro Molekül, die sich vorzugsweise jeweils an einem Ende der Kette befinden, und das eine dynamische Viskosität bei 25 °C von unterhalb oder gleich 250 Pa.s, vorzugsweise 100 Pa.s und noch besonders bevorzugt 10 Pa.s besitzt,
und **dadurch**, daß man eine Kieselsäure mit einer spezifischen Oberfläche BET zwischen 50 und 400 m²/g und solche Bedingungen der Mischung auswählt, daß die dynamische Viskosität der Suspension bei 25 °C unterhalb oder gleich 300 Pa.s, vorzugsweise 250 Pa.s und noch besonders bevorzugt 200 Pa.s beträgt.

8. Verfahren zur Herstellung einer durch Polyaddition vulkanisierbaren Silicon-Zusammensetzung, **dadurch gekennzeichnet, daß** es darin besteht, die folgenden Produkte zu vermischen:
- A - eine solche Suspension wie sie nach dem in irgendeinem der Ansprüche 1 bis 7 definierten Verfahren hergestellt wird;
- B - ein oder mehrere POS (I) wie in Anspruch 1 definiert,
- C - ein oder mehrere POS (II) wie in Anspruch 1 definiert,
- D - gegebenenfalls ein oder mehrere POS (III) wie in Anspruch 1 definiert, die als Verdünnungsmittel verwendet werden,
- E - ein katalytisches System, umfassend einen Katalysator, vorzugsweise platinartig, und gegebenenfalls einen Inhibitor.

9. Verfahren nach Anspruch 8, **dadurch gekennzeichnet, daß** man
- die Zusammensetzung in Form eines Zweikomponentensystems C₁ und C₂ herstellt, das dazu vorgesehen ist, miteinander in Kontakt zu treten, um ein durch Polyaddition zwischen den POS (I) und (II) vernetztes Elastomer zu erzeugen,
- und **dadurch**, daß man in der Weise verfährt, daß nur einer der Teile C₁ oder C₂ den Katalysator D und gegebenenfalls das eine oder andere der POS (I) und (II) enthält.

## Claims

1. Process for preparing a suspension of a particulate, preferably siliceous, filler in a material formed by a silicone oil comprising:
- polyorganosiloxanes (POSs) of type (I) which carry Si-alkenyl - preferably Si-vinyl - functional groups capable of reacting with the Si-H crosslinking functional groups of a POS of type II;
- optionally, POSs of type (II) which carry Si-H crosslinking functional groups capable of reacting with the Si-alkenyl functional groups of the POSs (I);
- and/or optionally, POSs of type (III) that differ from the POSs (I) and (II),
the said suspension being able to be used, in particular, for producing silicone compositions that can be cured by polyaddition,
this process being of the kind of those in which the particulate filler is treated with the aid of a compatibilizing agent or compatibilizer (CA), and being **characterized in that** it essentially consists
a)in introducing a first CA fraction of between 1 and 3% by dry weight relative to the silica into the preparation medium before and/or substantially simultaneously with the contacting of at least part of the silicone oil employed with at least part of the particulate filler used, this introduction of the compatabilizing agent taking place in one or more stages for this first CA fraction; and
b) in introducing, after this contacting of the POS and the filler, a second CA fraction representing between 10 and 15% by dry weight of the silica;
c) this compatibilizing agent being:
- as regards the first fraction of the said agent: selected from a silazane, a hydroxylated siloxane, an amine, an alkylamine, an organic acid, and mixtures thereof, with the additional condition whereby measures are taken to ensure that this compatabilizing agent is in the presence of water in the preparation medium and
- with regard to the second fraction of the said agent: a silazane.

2. Process according to Claim 1, **characterized in that**:
- all or some of the silicone oil, the water and all or some of the particulate siliceous filler are mixed with first CA fraction;
- the second CA fraction is incorporated into the mixture;
- optionally, the rest of the silicone oil and the rest of the silica are added;
- the mixture is left to react, while continuing the mixing;
- the mixture is devolatilized;
- optionally, the devolatilized mixture is left to cool down; and
- optionally, the suspension is completed by adding the rest of the silicone oil.

3. Process according to Claim 2, **characterized in that**:
- 1. a mixture comprising the silicone oil, the water and the first CA fraction is homogenized;
- 2. the silica-based particulate filler is gradually added to the mixture obtained at 1;
- 3. the mixing is continued;
- 4. the second CA fraction is gradually incorporated into the mixture obtained at 3;
- 5. the mixing is continued; and
- 6. the mixture is devolatilized, by heating to a temperature ≥ 100°C.

4. Process according to Claim 2, **characterized in that**:
- 1'. the silicone oil and the water are homogenized;
- 2'. the particulate filler and, at the same time, the first CA fraction are gradually incorporated into the mixture obtained at 1;
- 3. the mixing is continued;
- 4. the second CA fraction is gradually incorporated into the mixture obtained at 3;
- 5. the mixing is continued; and
- 6. the mixture is devolatilized, preferably by heating to a temperature ≥ 100°C.

5. Process according to Claim 2,
**characterized in that**:
- 1". the silicone oil is introduced,
- 2". the particulate filler together with the first CA fraction and the water are gradually and simultaneously incorporated into the oil;
- 3. the mixing is continued;
- 4. the second CA fraction is gradually incorporated into the mixture obtained at 3;
- 5. the mixing is continued; and
- 6. the mixture is devolatilized, by heating to a temperature ≥ 100°C.

6. Process according to one of the preceding claims, in which the compatabilizing agent is:
- as regards the first CA fraction: selected from HMDZ, a monofunctional hydroxylated siloxane, aqueous ammonia, diethylamine, formic acid, acetic acid, and mixtures thereof; and
- with regard to the second CA fraction: HMDZ.

7. Process according to any one of Claims 1 to 6, **characterized in that** an alkenylated - preferably vinylated - silicone oil comprising at least two Si-alkenyl groups per molecule, each preferably located at one end of the chain, and having a dynamic viscosity at 25°C not exceeding 250 Pa.s, preferably not exceeding 100 Pa.s and more preferably still not exceeding 10 Pa.s, is employed,
and **in that** a silica having a BET specific surface area of between 50 and 400 m²/g and mixing conditions such that the dynamic viscosity at 25°C of the suspension does not exceed 300 Pa.s, preferably does not exceed 250 Pa.s, and more preferably still does not exceed 200 Pa.s, are chosen.

8. Process for obtaining a silicone composition that can be cured by polyaddition, **characterized in that** it consists in mixing the following products:
- A - a suspension as prepared according to the process as defined in any one of Claims 1 to 7;
- B - one or more POSs (I), as defined in Claim 1;
- C - one or more POSs (II), as defined in Claim 1;
- D - optionally, one or more POSs (III), as defined in Claim 1, useful as diluent(s); and
- E - a catalytic system comprising a catalyst, preferably of the platinum kind, and, optionally, an inhibitor.

9. Process according to Claim 8,
**characterized**
- **in that** the composition is produced in the form of a two-component system comprising parts C₁ and C₂ which are intended to be brought into contact with each other in order to produce an elastomer crosslinked by polyaddition between the POSs (I) and (II)
- and **in that** care is taken to ensure that only one of the parts, C₁ or C₂, contains some catalyst D and, optionally, one or other of the POSs (I) and (II).
